(19) Europäisches Patentamt / European Patent Office / Office européen des brevets

(11) **EP 3 892 370 A1**

(12) **EUROPEAN PATENT APPLICATION**
published in accordance with Art. 153(4) EPC

(43) Date of publication:
**13.10.2021 Bulletin 2021/41**

(21) Application number: **19893308.7**

(22) Date of filing: **03.12.2019**

(51) Int Cl.:
**B01J 29/035** *(2006.01)*     **B01J 29/24** *(2006.01)*
**B01J 29/46** *(2006.01)*     **B01J 29/76** *(2006.01)*
**B01J 37/16** *(2006.01)*

(86) International application number:
**PCT/JP2019/047294**

(87) International publication number:
**WO 2020/116471 (11.06.2020 Gazette 2020/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.12.2018 JP 2018226925**

(71) Applicants:
• **National University Corporation Hokkaido University**
  **Sapporo-shi, Hokkaido 060-0808 (JP)**
• **Furukawa Electric Co., Ltd.**
  **Tokyo 100-8322 (JP)**

(72) Inventors:
• **NISHII Mai**
  **Tokyo 100-8322 (JP)**
• **BANBA Yuichiro**
  **Tokyo 100-8322 (JP)**

• **SEKINE Kaori**
  **Tokyo 100-8322 (JP)**
• **NAKAI Yukako**
  **Tokyo 100-8322 (JP)**
• **FUKUSHIMA Masayuki**
  **Tokyo 100-8322 (JP)**
• **KATO Sadahiro**
  **Tokyo 100-8322 (JP)**
• **SASAKI Hirokazu**
  **Tokyo 100-8322 (JP)**
• **NISHIDA Shinsuke**
  **Tokyo 100-8322 (JP)**
• **MASUDA Takao**
  **Sapporo-shi, Hokkaido 060-0808 (JP)**
• **NAKASAKA Yuta**
  **Sapporo-shi, Hokkaido 060-0808 (JP)**
• **YOSHIKAWA Takuya**
  **Sapporo-shi, Hokkaido 060-0808 (JP)**

(74) Representative: **Winter, Brandl - Partnerschaft mbB**
**Alois-Steinecker-Straße 22**
**85354 Freising (DE)**

(54) **FUNCTIONAL STRUCTURE PRECURSOR AND FUNCTIONAL STRUCTURE**

(57)     Provided is a functional structure which can prevent metal fine particles from aggregating, can suppress bonding of an active metal species and a support, and can easily undergo catalyst activation before being used for reactions. The functional structure includes supports each having a porous structure and including a zeolite-type compound, and at least one functional material precursor present in the supports and including a metal element (M), in which each of the supports has channels communicating with one another, the functional material precursor is present at least in the channel of each of the supports, and the metal element (M) having constituted the functional material precursor is partially substituted with an element having constituted the supports.

EP 3 892 370 A1

# FIG. 1A

# FIG. 1B

## Description

TECHNICAL FIELD

The present invention relates to a functional structure precursor including supports (frameworks) having a porous structure and a functional material and also relates to a functional structure.

BACKGROUND ART

A variety of catalysts are known for use in processes of producing the hydrocarbon compounds for use as raw materials of the liquid fuel products such as synthetic fuels and synthetic oils as alternative fuels to petroleum. For example, Fischer-Tropsch synthesis reaction (hereinafter, also referred to as "FT synthesis reaction") is known, which includes the catalytic reaction to produce the hydrocarbons, specifically the liquid hydrocarbons from a synthesis gas composed mainly of carbon monoxide gas (CO) and hydrogen gas ($H_2$). Examples of the catalyst for use in the FT synthesis reaction include a catalyst disclosed in Patent Document 1, which includes a support such as silica or alumina, and an active metal such as cobalt or iron on the support, and a catalyst disclosed in Patent Document 2, which includes cobalt, zirconium or titanium, and silica.

The catalyst for use in the FT synthesis reaction can be obtained in the form of a supported cobalt or ruthenium oxide (unreduced catalyst) by, for example, impregnating a support such as silica or alumina with a cobalt salt or a ruthenium salt and then calcinating the impregnated support. The catalyst obtained in such a way should be made sufficiently active for the FT synthesis reaction. As disclosed in Patent Document 3, therefore, the obtained catalyst should be reduced by being brought into contact with a reducing gas such as a hydrogen gas, so that the oxide of cobalt and/or ruthenium is converted (altered) into an active metal form.

As disclosed in Patent Document 4, it is known that the FT synthesis reaction is accompanied by an extremely large amount of heat generation, which causes a hot spot at a locally overheated portion of the catalyst surface, so that the catalytic activity may decrease by proceeding the side reactions (such as carbonaceous substance precipitation) occurred at the hot spot caused on the catalyst surface. To prevent the formation of such a hot spot, it is necessary to prevent the aggregation of the active metal species (metal fine particles) acting as a catalyst and to provide dispersed active sites. In order to prevent the aggregation of the active metal species, a support capable of strongly interacting with the active metal species may be used to prevent the metal fine particles from easily aggregating together.

A known example of such a method includes a sol-gel method by which the metal fine particles are highly dispersed and supported. In such the sol-gel method, the active metal species can be uniformly introduced at the atomic level at the stage of synthesizing a metal oxide for serving as a support. The active metal species of the supported metal catalyst are extremely highly dispersed and incorporated in the lattices of the metal oxide support and thus do not easily aggregate during different processes and reactions. Unfortunately, such active metal species are strongly bonded to the support and thus may resist catalyst activation prior to the reaction, which may raise the problem of insufficient catalytic activity.

The aggregation of the metal fine particles also causes a decrease in the effective surface area of the catalyst, which leads to a decrease in the catalytic activity and thus makes the life of the catalyst shorter than usual. This requires the catalyst to be replaced or refreshed at short intervals, which is disadvantageous from the perspective of replacement operation and catalyst resource saving. For example, Patent Documents 5 and 6 disclose a technique for preventing the catalyst aggregation, which includes preparing amorphous silica-coated metal fine particles using an emulsion technique; and hydrothermally treating the particles to incorporate the metal fine particles into zeolite. The emulsion technique used to form the amorphous silica-coated metal fine particles includes mixing a surfactant and a metal source in an organic solvent to form an emulsion, adding a reducing agent to the emulsion to form the metal fine particles, and then adding a silane coupling agent to the emulsion to form the silica layer on the surfaces of the metal fine particles. Unfortunately, when the metal particles are produced using such an emulsion technique, the size of the resulting particles is affected by the size of the droplets formed during the emulsion forming process and by the tendency of the metal particles to aggregate. In general, the base metals can hardly remain in a nanoparticle size. Patent Documents 5 and 6 only disclose the examples showing the nanosized noble metal particle samples and do not disclose the nanosized particle samples of any base metal, which is vulnerable to aggregation, or any oxide of the base metal. It has also been reported that, in the emulsion technique according to Patent Documents 5 and 6, the organic solvent and the surfactant can remain, and the material such as the reagent used during the formation of the zeolite structure can remain as an impurity, which can have an adverse effect on the thermal stability of the zeolite.

Patent Document 1: Japanese Unexamined Patent Application, Publication No. H04-227847
Patent Document 2: Japanese Unexamined Patent Application, Publication No. S59-102440
Patent Document 3: PCT International Publication No. WO2015/072573

Patent Document 4: Japanese Unexamined Patent Application, Publication No. 2000-70720
Patent Document 5: Japanese Unexamined Patent Application, Publication No. 2017-128480
Patent Document 6: PCT International Publication No. WO2010/097108

DISCLOSURE OF THE INVENTION

Problems to be Solved by the Invention

It is an object of the present invention to provide a functional structure precursor which can prevent metal fine particles from aggregating, can suppress bonding of an active metal species and a support, and can easily undergo catalyst activation before being used for reactions, and to provide a functional structure derived from such a precursor.

Means for Solving the Problems

As a result of intensive studies for achieving the object, the inventors have found a functional structure precursor including: supports each having a porous structure and including a zeolite-type compound; and at least one functional material precursor present in the supports and including a metal element (M), in which each of the supports has channels communicating with one another, the functional material precursor is present at least in the channel of each of the supports, and the metal element (M) having constituted the functional material precursor is partially substituted with an element having constituted the supports, and have completed the present invention based on the findings that such a functional structure precursor can prevent metal fine particles from aggregating, can suppress bonding of an active metal species and a support, and can easily undergo catalyst activation prior to reactions.

Specifically, the present invention has the following principal features.

(1) A functional structure precursor including: supports each having a porous structure and including a zeolite-type compound; and at least one functional material precursor present in the supports and including a metal element (M), wherein each of the supports has channels communicating with one another, the functional material precursor is present at least in the channel of each of the supports, and the metal element (M) having constituted the functional material precursor is partially substituted with an element having constituted the supports.

(2) The functional structure precursor according to aspect (1), wherein the metal element (M) exists as a central atom of two types of coordination structures in the functional material, a first type being a coordination structure of four-coordination number and a second type being a coordination structure of six-coordination number.

(3) The functional structure precursor according to aspect (1) or (2), wherein a ratio of the number of the metal element (M) in the coordination structure of four-coordination number to the total number of the metal element (M) in the coordination structure of four-coordination number and the coordination structure of six-coordination number is 0.75 or less, by atomic ratio.

(4) A functional structure precursor including: supports each having a porous structure and including a zeolite-type compound; and at least one functional material precursor present in the supports and including a metal element (M), wherein each of the supports has channels communicating with one another, the functional material precursor is present at least in the channel of each of the supports, and the existence ratio P of the metal element (M) forming a coordination structure of four-coordination number is 0.75 or less, the existence ratio P being calculated by substituting into formula (1) value (a) representing a peak intensity of a metal element forming the coordination structure of four-coordination number (a metal element being in the functional structure precursor and having a spectral pattern corresponding to metallosilicate) and value (b) representing a peak intensity of a metal element forming a coordination structure of six-coordination number (a metal element being in the functional structure precursor and having a spectral pattern corresponding to a metal oxide before being reduced to metal), based on an X-ray absorption near edge structure (XANES) spectrum determined from an absorption edge of the metal in the functional structure precursor measured by X-ray absorption fine structure (XAFS) measurement.

$$P = (a) / (a+b) \quad \cdots (1)$$

(5) The functional structure precursor according to aspect (4), wherein the existence ratio P is 0.20 or less.

(6) A functional structure precursor including: supports each having a porous structure and including a zeolite-type compound; and at least one functional material precursor present in the supports and including a metal element (M), wherein each of the supports has channels communicating with one another, the functional material precursor is present at least in the channel of each of the supports, and the existence ratio P of the metal element (M) forming a coordination structure of four-coordination number is 0 or more and 0.10 or less, the existence ratio P being calculated by substituting into formula (1) value (a) representing a peak intensity of a metal element forming the coordination structure of four-coordination number (a metal element being in the functional structure precursor and having a spectral pattern corresponding to metallosilicate) and value (b) representing a peak intensity of a metal element forming a coordination structure of six-coordination number (a metal element being in the functional structure precursor and having a spectral pattern corresponding to a metal oxide before being reduced to metal), based on an X-ray absorption near edge structure (XANES) spectrum determined from an absorption edge of the metal in the functional structure precursor measured by X-ray absorption fine structure (XAFS) measurement.

$$P=(a)/(a+b) \quad \cdots (1)$$

(7) The functional structure precursor according to any one of aspects (1) to (6), wherein the channels have any one of a one-dimensional pore, a two-dimensional pore, and a three-dimensional pore of a framework structure of the zeolite-type compound, and have an enlarged pore portion different from the one-dimensional pore, the two-dimensional pore, and the three-dimensional pore, and the functional material precursor is present at least in the enlarged pore portion.

(8) The functional structure precursor according to aspect (7), wherein the enlarged pore portion connects a plurality of pores constituting any one of the one-dimensional pore, the two-dimensional pore, and the three-dimensional pore.

(9) The functional structure precursor according to any one of aspects (1) to (8), wherein the functional material precursor includes a catalytic material precursor, and each of the supports carries at least one catalytic material precursor.

(10) The functional structure precursor according to aspect (9), wherein the catalytic material precursor is in the form of a metal oxide fine particle.

(11) The functional structure precursor according to aspect (10), wherein the metal oxide fine particle has an average particle size larger than an average inner diameter of the channels and equal to or smaller than an inner diameter of the enlarged pore portion.

(12) The functional structure precursor according to aspect (10), wherein the metal element (M) of the metal oxide fine particle is included in an amount from 0.5 to 2.5 mass% with respect to the functional structure.

(13) The functional structure precursor according to any one of aspects (10) to (12), wherein the metal oxide fine particle has an average particle size of 0.1 nm to 50 nm.

(14) The functional structure precursor according to any one of aspects (10) to (13), wherein a ratio of the average particle size of the metal oxide fine particle to the average inner diameter of the channels is from 0.06 to 500.

(15) The functional structure precursor according to any one of aspects (1) to (14), wherein the channels have an average inner diameter of 0.1 nm to 1.5 nm.

(16) The functional structure precursor according to any one of aspects (1) to (15), further including at least one additional functional material precursor held on an outer surface of the support.

(17) The functional structure precursor according to aspect (16), wherein the content of at least one functional material precursor present in the support is higher than the content of the at least one additional functional material precursor held on the outer surface of the support.

(18) The functional structure precursor according to any one of aspects (1) to (17), wherein the zeolite-type compound is a silicate compound.

(19) A functional structure including a product of reduction of the precursor according to any one of aspects (1) to (18).

Effects of the Invention

The present invention makes it possible to provide a functional structure which can prevent the metal fine particles from aggregating, can suppress bonding of the active metal species and the support, and allows easy catalyst activation before being used for reactions.

BRIEF DESCRIPTION OF THE DRAWINGS

FIGS. 1(a) and 1(b) are views schematically showing the inner structure of a functional structure precursor according to an embodiment of the present invention, in which FIG. 1(a) is a perspective view (shown partially in transverse cross-sectional view), and FIG. 1(b) is a partially enlarged cross-sectional view.

FIGS. 2(a) and 2(b) are partially enlarged cross-sectional views for illustrating an example of the function of the functional structure shown in FIGS. 1(a) and 1(b), in which FIG. 2(a) is a view for illustrating a sieving function, and FIG. 2(b) is a view for illustrating a catalytic function.

FIG. 3 is a flowchart showing an example of a method of producing the functional structure precursor of FIGS. 1(a) and 1(b).

FIG. 4 is a schematic view showing a modification of the functional structure precursor of FIGS. 1(a) and 1(b).

PREFERRED MODE FOR CARRYING OUT THE INVENTION

Hereinafter, embodiments of the present invention will be described in detail regarding the drawings.

Configuration of Functional structure Precursor

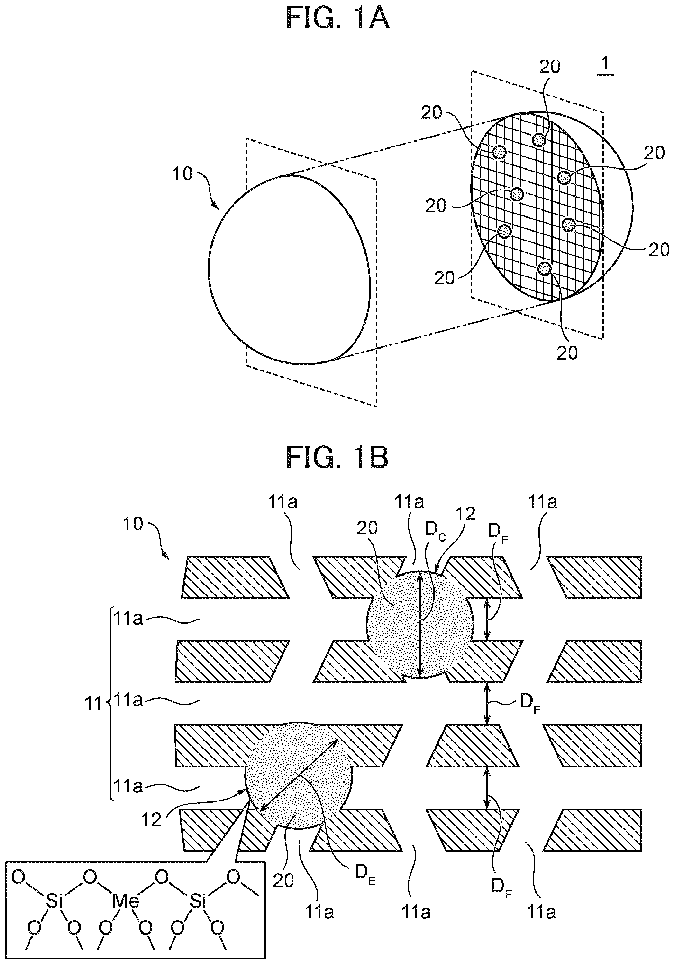

FIGS. 1(a) and 1(b) are views schematically showing the configuration of a functional structure precursor according to an embodiment of the present invention, in which FIG. 1(a) is a perspective view (shown partially in transverse cross-sectional view), and FIG. 1(b) is a partially enlarged cross-sectional view. It should be noted that FIGS. 1(a) and 1(b) show only an example of the functional structure precursor, and the configuration shown in FIGS. 1(a) and 1(b) such as shapes and dimensions are not intended to limit that of the present invention.

As shown in FIG. 1(a), a functional structure precursor 1 includes frameworks 10 serving as supports each having a porous structure and including a zeolite-type compound, and at least one functional material precursor 20 present in the frameworks 10.

The functional material precursor 20 is a material that performs one or more functions alone or in cooperation with the framework 10. Examples of such a function include a catalytic function, a light emitting (fluorescence) function, a light absorbing function, and a discriminating function. The functional material precursor 20 can be altered to the functional material which is preferably, for example, a catalytic material having a catalytic function. In such a case, the functional material precursor 20 is a catalytic material precursor, and the framework 10 serves as a support that carries the catalytic material precursor.

In the functional structure precursor 1, a plurality of the functional material obtained by altering a plurality of the functional material precursor 20, 20, ... are included in the porous structure of the framework 10. The catalytic material as an example of the functional material obtained by altering the functional material precursor 20 is preferably in the form of a metal oxide fine particle that is a metal fine particle precursor. The metal oxide fine particle and the metal fine particle will be described later in detail. Besides the metal oxide, the functional material precursor 20 may also be in the form of a particle including a metal complex oxide, a mixture or composite of a metal oxide, or a mixture or composite of a metal oxide and a metal.

The framework 10 has a porous structure, and as shown in FIG. 1(b), preferably has multiple pores a, 11a, ... and channels 11 communicating with one another. The functional material precursor 20 is present at least in the channel 11 of the framework 10 and is preferably held at least in the channel 11 of the framework 10. More preferably, the functional material precursor 20 is partially bonded to the framework 10.

Such a configuration restricts the movement of the functional material in the framework 10 and effectively prevents aggregation of the functional material obtained by altering the functional material precursor 20. This results in effective prevention of a decrease in the effective surface area of the functional material and results in long-term retention of the function of the functional material obtained by altering the functional material precursor 20. In other words, the functional structure precursor 1 makes it possible to prevent a decrease in the function caused by aggregation of the functional material, and to prolong the life of the functional structure obtained by altering the functional material precursor 20. Moreover, due to the prolonged life of the functional structure, the frequency of replacement of the functional structure 1 can be reduced, and the amount of discarding of the used functional structure can be greatly reduced, which leads to resource-saving.

In general, when the functional structure is used in a fluid (e.g., heavy oil, a reforming gas such as $NO_x$), the functional structure may receive an external force from the fluid. In such a case, if the functional material is held with only deposition state on the outer surface of the framework 10, there will be a problem in that, due to the influence of the external force from the fluid, the functional material can easily separate from the outer surface of the framework 10. On the other hand, in the functional structure obtained by altering the functional structure precursor 1, the functional material obtained by altering the functional material precursor 20 is held at least in the channel 11 of the framework 10 or partially bonded to the framework 10 and thus less likely to separate from the framework 10 even when receiving the influence of the external force from the fluid. Specifically, when the functional structure obtained by altering the functional structure precursor 1 is placed in the fluid, the fluid flowing into the channels 11 through the pores 11a of the framework 10 encounters flow channel resistance (frictional force), so that the velocity of the fluid flowing in the channel 11 would be lower than that of the fluid flowing on the outer surface of the framework 10. Due to the influence of such flow channel resistance, the pressure applied from the fluid onto the functional material obtained by altering the functional material precursor 20 held in the channel 11 becomes lower than that applied from the fluid onto the functional material outside the framework 10. Therefore, the functional material obtained by altering the functional material precursor 20 present in the framework 11 is effectively prevented from separating from the framework 11, and the function of the functional material obtained by altering the functional material precursor 20 can be stably maintained for a long period of time. The flow channel resistance would be higher when the channel 11 of the framework 10 has multiple curves or branches and the interior of the framework 10 has a more complicated three-dimensional structure.

In the functional structure precursor 1 according to an embodiment of the present invention, the metal element (M) that has constituted the functional material precursor 20 is partially substituted with the element that has constituted the framework 10. As used herein, the expression "the metal element (M) that has constituted the functional material precursor 20" refers to a metal element (M) derived from the functional material precursor 20. The metal element (M) constituting the framework 10 forms the particle in combination with the metal element (M) contained in the functional material precursor 20. Unfortunately, it is not clear what mechanism causes the partial substitution of the metal element (M) that has constituted the functional material precursor 20 with the element has constituted the framework 10. However, some phenomena, such as thermal diffusion of the metal element (M) in the functional material precursor 20, may cause the atomic level diffusion and movement of the metal element (M) from the functional material precursor 20 to the contact interface between the framework 10 and the functional material precursor 20 or to the inside of the framework 10, so that the metal element (M) that have been contained in the functional material precursor 20 is substituted with the element in the framework 10. Such a configuration allows the framework 10 to function as a solid acid catalyst. The function of such a solid acid catalyst remains even after the functional structure precursor 1 is altered. Specifically, the functional structure obtained by that can be used as a solid acid catalyst, for example, to promote hydrocracking of hydrocarbons such as naphtha. Further, the functional structure precursor 1 includes at least one functional material precursor 20 present in the framework 10 and including the metal element (M), in which the functional material obtained by altering the functional material precursor 20 can suppress, during the reaction of the solid acid catalyst, the deposition of coke produced as a biproduct of the catalytic reaction. If the coke is deposited on the surface of the functional material obtained by altering the functional material precursor 20 or the framework 10 (in particular, the solid acid-containing portion), the coke may degrade or destroy the catalytic activity of the functional material obtained by altering the functional material precursor 20. Therefore, the functional structure precursor 1 is not only effective in preventing a decrease in function, which would be caused by aggregation or separation of the functional material obtained by altering the functional material precursor 20 mentioned above, but also effective in preventing the deposition of coke by the existence of the functional material so that the catalytic activity can be maintained at an excellent level for a longer period of time.

As used herein, the term "functional material" refers to a material including a metal element (M) and being able to perform the function inherent to the metal element (M), and the term "functional material precursor" (also simply referred to as "precursor" with the same meaning) refers to a material including a metal element (M) and being not able to perform the function inherent to the metal element (M) or being less active for the function than the "functional material". The "functional material" and the "precursor" have different states depending on the desired function. For example, if the "functional material" is a catalytic material, the "functional material" may include the metal element (M) in a metallic state, while the "precursor" may include the metal element (M) in the form of metal oxide. In other words, the metal element (M) in a metallic state may exhibit the catalytic activity and the metal element (M) in the form of metal oxide may not exhibit the catalytic activity.

In the functional structure precursor, the metal element (M) preferably exists as a central atom of two types of coordination structures in the functional material precursor, in which the first type is a coordination structure of four-coordination number and a second type is a coordination structure of six-coordination number. In this regard, the "coordination structure of four-coordination number" and the "coordination structure of six-coordination number" can be identified based on an X-ray absorption near edge structure (XANES) spectrum determined from the absorption edge of the metal in the functional structure precursor measured by X-ray absorption fine structure (XAFS) measurement. The metal element (M) forming the "coordination structure of four-coordination number" has a spectral pattern corresponding to metallosilicate and more specifically is partially substituted with the element constituting the framework 10. The metal element (M) forming the "coordination structure of six-coordination number" has a spectral pattern corresponding to the functional material precursor 20 (metal oxide) before being reduced to metal, that is, in the functional structure precursor 1. In this manner, the metal element (M) is contained not only in the functional material precursor 20 present in the channels of the framework 10 but also in the framework 10.

In the functional structure precursor 1 with such configuration, a ratio of the number of the metal element (M) in the coordination structure of four-coordination number to the total number of the metal element (M) in the coordination structure of four-coordination number and the coordination structure of six-coordination number is preferably 0.75 or less, more preferably 0.30 or less, even more preferably 0.20 or less, and further more preferably 0.10 or less, by atomic ratio. In this case, the number of the metal element (M) in the coordination structure of four-coordination number is kept low while a certain number of the metal element (M), as the functional material 20, in the coordination structure of six-coordination number are ensured, so that high catalytic activity can be provided and a high-performance catalyst can be provided, for example, for the FT synthesis reaction and the methane reforming reaction (autothermal reforming, partial oxidation reaction, steam reforming, dry reforming).

In view of the catalytic activity for such reactions as the FT synthesis reaction and the methane reforming reaction (autothermal reforming, partial oxidation reaction, steam reforming, dry reforming), in the functional structure precursor 1, a ratio of the number of the metal element (M) in the coordination structure of four-coordination number to the total number of the metal element (M) in the coordination structure of four-coordination number and the coordination structure of six-coordination number may be 0, by atomic ratio. In other words, the metal element (M) having constituted the precursor 20 may not be partially substituted with the element having constituted the framework 10. The ratio of the number of the metal element (M) in the coordination structure of four-coordination number to the total number of the metal element (M) in the coordination structure of four-coordination number and the coordination structure of six-coordination number is preferably 0 or more and 0.10 or less, by atomic ratio. For example, the content of the metal element (M) in the coordination structure of four-coordination number strongly tends to be lower (sometimes zero) when the metal element (M) is cobalt, molybdenum, copper, nickel, or manganese than when the metal element (M) is iron.

More specifically, the ratio represents the existence ratio P of the metal element (M) forming the coordination structure of four-coordination number, and

the existence ratio P is calculated by substituting into the below formula (1) the value (hereinafter also referred to as value (a)) representing the peak intensity of the metal element forming the coordination structure of four-coordination number (the metal element being in the functional structure precursor and having the spectral pattern corresponding to metallosilicate) and the value (hereinafter also referred to as value (b)) representing the peak intensity of the metal element forming the coordination structure of six-coordination number (the metal element being in the functional structure precursor and having the spectral pattern corresponding to the metal oxide before being reduced to metal). If the separation of the peak is necessary, linear coupling of least squares may be used to separate the peak intensity of the metal element forming the coordination structure of four-coordination number and the peak intensity of the metal element forming the coordination structure of six-coordination number. The values a and b for formula (1) below may be determined respectively from the peak area derived from the peak intensity of the metal element forming the coordination structure of four-coordination number and the peak area derived from the peak intensity of the metal element forming the coordination structure of six-coordination number.

$$P = (a) / (a + b) \qquad (1)$$

The channels 11 preferably have any one of a one-dimensional pore, a two-dimensional pore, and a three-dimensional pore, which are defined by the framework structure of the zeolite-type compound, and preferably have an enlarged pore portion 12 different from the one-dimensional pore, the two-dimensional pore, and the three-dimensional pore. In this case, the functional material 20 is preferably present at least in the enlarged pore portion 12, more preferably included at least in the enlarged pore portion 12, and even more preferably bonded to the enlarged pore portion 12. As used herein, the term "one-dimensional pore" or "one-dimensional pores" refers to a tunnel-type or cage-type pore that forms a one-dimensional channel or refers to multiple tunnel-type or cage-type pores (multiple one-dimensional channels) that form multiple one-dimensional channels. The term "two-dimensional pore" refers to a two-dimensional channel in which multiple one-dimensional channels are connected two-dimensionally. The term "three-dimensional pore" refers to a three-dimensional channel in which multiple one-dimensional channels are connected three-dimensionally. According to this configuration, the movement of the functional material obtained by altering the functional material precursor 20 is further restricted in the framework 10, and separation of the functional material obtained by altering the functional material precursor 20 and aggregation of the functional material obtained by altering the functional material precursor are more effectively prevented. The state in which the functional material precursor 20 is included in the porous structure of the framework 10 indicates that the functional material precursor 20 is enclosed within the framework 10. In this regard, the functional material precursor 20 and the framework 10 do not always have to be in direct contact with each other, and any other material (e.g., a surfactant) may be present between the functional material precursor 20 and the framework 10. The prevention of the partial bonding between the functional material 20 and the framework 10 can make it easy to activate the functional material.

The enlarged pore portion 12 preferably connects a plurality of pores 11a, 11a constituting any one of the one-dimensional pore, the two-dimensional pore, and the three-dimensional pore. According to the configuration, another channel different from the one-dimensional pore, the two-dimensional pore, or the three-dimensional pore is provided in the framework 10 to exert the function of the functional material 20 more effectively.

FIG. 1(b) shows a case in which the functional material precursor 20 is included in the enlarged pore portion 12. Such a configuration is non-limiting, and alternatively, the functional material precursor 20 may be bonded to the enlarged pore portion 12 or be held in the channel 11 while partially protruding from the enlarged pore portion 12. Alternatively, the functional material precursor 20 may be partially embedded in a portion of the channel 11 other than the enlarged pore portion 12 (e.g., an inner wall portion of the channel 11) or may be held by fixation or the like.

The channel 11 preferably has a three-dimensional structure including a branching portion or a junction portion inside the framework 10, and the enlarged pore portion 12 is preferably provided at the branching portion or the junction portion of the channel 11.

The average inner diameter $D_F$ of the channels 11 provided in the framework 10 is calculated from the average of the short diameter and the long diameter of the pores 11a constituting any one of the one-dimensional pore, the two-dimensional pore, and the three-dimensional pore. The average inner diameter $D_F$ of the channels 11 is typically from 0.1 nm to 1.5 nm and preferably from 0.5 nm to 0.8 nm. The inner diameter $D_E$ of the enlarged pore portion 12 is typically from 0.5 nm to 50 nm, preferably from 1.1 nm to 40 nm, and more preferably from 1.1 nm to 3.3 nm. The inner diameter $D_E$ of the enlarged pore portion 12 depends, for example, on the pore size of the precursor material (A) described later and the average particle size $D_C$ of the functional material precursor 20 to be included. The inner diameter $D_E$ of the enlarged pore portion 12 is such that it is possible to include the functional material precursor 20.

The framework 10 includes a zeolite-type compound. Examples of the zeolite-type compound include silicate compounds such as zeolite (aluminosilicate), cation-exchanged zeolite and silicalite, zeolite analogue compounds such as aluminoborate, aluminoarsenate and germanate, and phosphate-based zeolite analogue materials such as molybdenum phosphate. Among them, the zeolite-type compound is preferably a silicate compound.

The framework structure of the zeolite-type compound may be selected from FAU type (Y type or X type), MTW type, MFI type (ZSM-5), FER type (ferrierite), LTA type (A type), MWW type (MCM-22), MOR type (mordenite), LTL type (L type), BEA type (beta type), and so on, and is preferably MFI type and more preferably ZSM-5. The zeolite-type compound has multiple pores with a diameter (size) depending on the framework structure. For example, an MFI-type zeolite compound has a maximum pore size of 0.636 nm (6.36 Å) and an average pore size of 0.560 nm (5.60 Å).

Hereinafter, a detailed description will be provided of a case in which the functional material precursor 20 is in the form of the metal oxide fine particles (hereinafter also referred to as "fine particles").

When the functional material precursor 20 is in the form of a fine particle which may be a primary particle or a secondary particle resulting from the aggregation of the primary particles, the fine particle 20 preferably has an average particle size $D_C$ larger than the average inner diameter $D_F$ of the channels 11 and equal to or smaller than the inner diameter $D_E$ of the enlarged pore portion 12 ($D_F < D_C \le D_E$). The fine particles 20 with such size are preferably included in the enlarged pore portions 12 in the channels 11, so that the movement of the fine particles 20 is restricted in the framework 10. More preferably, such fine particles 20 are held in and partially bonded to the enlarged pore portions 12 so that the movement of the fine particles 20 is further suppressed. More preferably, such fine particles 20 are held in and partially bonded to the enlarged pore portions 12 so that the movement of the fine particles 20 is further suppressed. Therefore, even when an external force is applied from a fluid to the fine particles 20, the movement of the fine particles 20 is suppressed in the framework 10, so that the fine particles 20, 20... respectively included in or bonded to the enlarged pore portions 12 dispersed in the channels 11 of the framework 10 are effectively prevented from coming into contact with one another.

In the form of either a primary particle or a secondary particle, the functional material 20 precursor in the form of the metal oxide fine particle preferably has an average particle size $D_C$ of from 0.1 nm to 50 nm, more preferably 0.1 nm or more and less than 30 nm, even more preferably from 0.4 nm to 14.0 nm, and further more preferably from 1.0 nm to 3.3 nm. The ratio ($D_C/D_F$) of the average particle size $D_C$ of the metal oxide fine particles 20 to the average inner diameter $D_F$ of the channels 11 is preferably from 0.06 to 500, more preferably from 0.1 to 36, even more preferably from 1.1 to 36, and further more preferably from 1.7 to 4.9.

When the functional material precursor 20 is in the form of the metal oxide fine particle, the content of the metal element (M) of the metal oxide fine particles in the functional structure precursor 1 is preferably 0.5 to 7.6 mass%, more preferably 0.5 to 6.9 mass%, even more preferably 0.5 to 2.5 mass%, and further more preferably 0.5 to 1.5 mass% with respect to the mass of the functional structure precursor 1. For example, when the metal element (M) is Co, the content (mass%) of the Co element is expressed by {(the mass of Co element)/(the mass of all elements in the functional structure precursor 1)} $\times$ 100.

The metal oxide fine particles only have to include a metal oxide. For example, the metal oxide fine particles may include a single metal oxide or a mixture of two or more metal oxides. The term "metal oxide" used herein to indicate the component (material) of the metal oxide fine particles is a generic term for an oxide or oxides containing at least one metal element (M), which is intended to include an oxide containing a single metal element (M) and a complex oxide containing two or more metal elements (M).

Examples of such a metal oxide include cobalt oxide ($CoO_x$), nickel oxide ($NiO_x$), iron oxide ($FeO_x$), copper oxide ($CuO_x$), zirconium oxide ($ZrO_x$), cerium oxide ($CeO_x$), aluminum oxide ($AlO_x$) niobium oxide ($NbO_x$), titanium oxide ($TiO_x$), bismuth oxide ($BiO_x$), molybdenum oxide ($MoO_x$), vanadium oxide ($VO_x$), chromium oxide ($CrO_x$), and manganese oxide ($MnO_x$). The metal oxide fine particles are preferably composed mainly of one or more of the above oxides, and more preferably composed of one or more of cobalt oxide ($CoO_x$), nickel oxide ($NiO_x$), copper oxide ($CuO_x$), molybdenum oxide ($MoO_x$), and manganese oxide ($MnO_x$). In such a case, it is easy to control the substitution of the metal element (M) that has constituted the functional material precursor 20 with the element constituting the framework 10.

When the functional material precursor 20 is in the form of the metal oxide fine particle, the metal fine particles obtained by altering the functional material precursor 20, which may be either the primary particles or the secondary particles, preferably have an average particle size $D_C$ of from 0.08 to 30 nm, more preferably 0.08 nm or more and less than 25 nm, even more preferably from 0.4 nm to 11.0 nm, and further more preferably from 0.8 nm to 2.7 nm. The ratio ($D_C/D_F$) of the average particle size $D_C$ of the metal fine particles 20 to the average inner diameter $D_F$ of the channels 11 is preferably from 0.05 to 300, more preferably from 0.1 to 30, even more preferably from 1.1 to 30, and further more preferably from 1.4 to 3.6.

When the functional material precursor 20 is in the form of the metal oxide fine particle, the content of the metal element (M) of the metal fine particles obtained by altering the functional material precursor 20 is preferably 0.5 mass% or more and 7.6 mass% or less, more preferably 0.5 mass% or more and 6.9 mass% or less, even more preferably 0.5 mass% or more and 2.5 mass% or less, and further more preferably 0.5 mass% or more and 1.5 mass% or less with respect to the mass of the functional structure precursor 1.

The metal fine particles only have to include a metal that remains unoxidized. For example, the metal fine particles may include a single metal or a mixture of two or more metals. When used herein to indicate the component (material) of the metal fine particle, the term "metal" is a generic term for a metallic material including one or more metal elements, which is intended to include an elementary metal including a single metal element (M) and a metal alloy including two or more metal elements (M).

Examples of such metal include platinum (Pt), palladium (Pd), ruthenium (Ru), nickel (Ni), cobalt (Co), molybdenum (Mo), tungsten (W), iron (Fe), chromium (Cr), cerium (Ce), copper (Cu), magnesium (Mg), aluminum (Al), and manganese (Mn). The metal fine particles are preferably composed mainly of one or more of the above oxides, and more preferably composed of one or more of nickel (Ni), cobalt (Co), molybdenum (Mo), copper (Cu), and manganese (Mn). In such a case, it is easy to control the substitution of the metal element (M) that has constituted the functional material precursor 20 with the element constituting the framework 10 so that it is easy to produce a catalyst structure including one or more of these metals.

The ratio (Si/M atomic ratio) of the number of silicon (Si) atoms in the framework 10 to the number of metal element (M) atoms in the fine particle 20 is preferably from 10 to 1000 and more preferably from 50 to 200. If the ratio is more than 1000, the effect of the functional material may not be a sufficient level, such as low activity. If the ratio is less than 10, the content of the fine particles 20 may be too high so that the strength of the framework 10 may tend to reduce. It should be noted that, the fine particles 20 described herein are the fine particles held, carried, or bonded inside the framework 10 and are not intended to include the fine particles deposited on the outer surface of the framework 10.

Function of Functional structure

As mentioned above, the functional structure precursor 1 includes a framework 10 with a porous structure and at least one functional material precursor 20 present in the framework 10. In the functional structure precursor 1 with such configuration, the functional material precursor 20 is altered to the functional material. In this section, a description will be present with reference to FIGS. 1(a) and 1(b), in which the terms "functional structure 1" and "functional material 20" will be used instead of "functional structure precursor 1" and "functional material precursor 20", respectively, for the sake of convenience. When the functional material 20 present in the framework of the functional structure 1 is brought into contact with a fluid, the function depending on the functional material 20 is exhibited. Specifically, a fluid coming into contact with the outer surface 10a of the functional structure 1 is allowed to flow into the interior of the framework 10 through a pore 11a formed at the outer surface 10a, then guided into the channels 11, and allowed to pass through the channels 11 and to flow out of the functional structure 1 through another pore 11a. When the functional material 20 held in or bonded to the channel 11 comes into contact with the fluid passing through the channel 11, a reaction (e.g., catalytic reaction) depending on the function of the functional material 20 is caused. The functional structure 1 also has a molecular sieving ability since the framework has a porous structure.

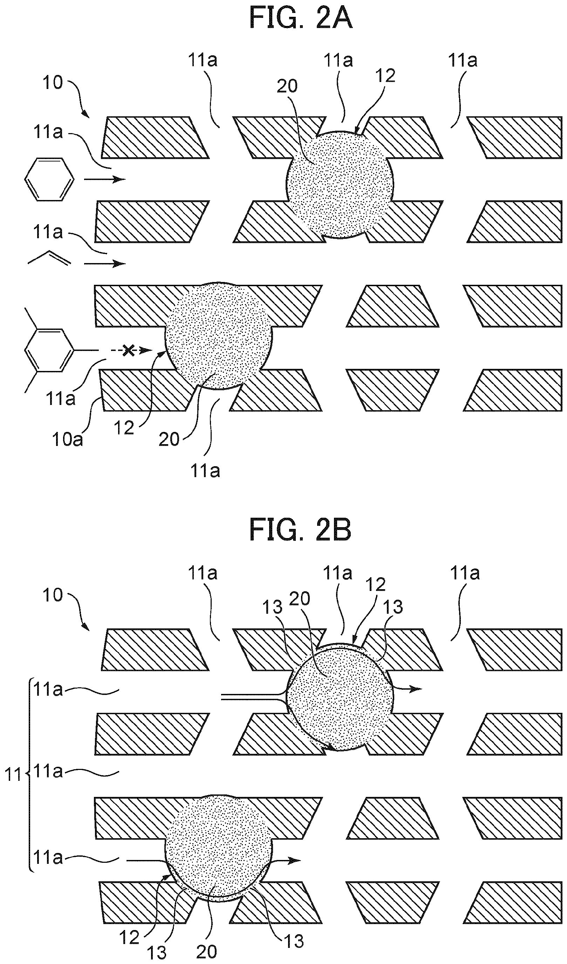

First, the molecular sieving ability of the functional structure 1 will be described with reference to FIG. 2(a) and an example in which the fluid is a liquid including benzene, propylene and mesitylene. As shown in FIG. 2(a), a compound (e.g., benzene or propylene) composed of molecule having size equal to or smaller than the diameter of the pore 11a, in other words, equal to or smaller than the inner diameter of the channel 11, can enter the framework 10. On the other hand, a compound (e.g., mesitylene) composed of molecule having size exceeding the diameter of the pore 11a cannot enter the framework 10 based on the shape of the molecules. Accordingly, among multiple compounds in the fluid, some compounds not capable of entering the framework 10 are restricted from reacting, and some other compounds capable of entering the framework 10 are allowed to react.

Among compounds produced by reactions in the framework 10, only compound composed of molecule having size equal to or smaller than the diameter of the pore 11a can exit through the pore 11a to the exterior of the framework 10 to obtain as a reaction product. On the other hand, some compounds are not capable of exiting through the pore 11a to the exterior of the framework 10. If such compounds are converted into compounds composed of molecule having size that allow exit to the exterior of the framework 10, the compounds can exit to the exterior of the framework 10. As a result, the use of the functional structure 1 makes it possible to selectively obtain a specific reaction product.

In the functional structure 1, as shown in FIG. 2(b), the functional material 20 is preferably held in the enlarged pore portion 12 of the channel 11 and bonded to the channel 11. When the average particle size $D_C$ of the functional material 20 in the form of the metal fine particle is larger than the average inner diameter $D_F$ of the channel 11 and smaller than the inner diameter $D_E$ of the enlarged pore portion 12 ($D_F < D_C < D_E$), a small channel 13 is provided between the metal fine particle and the enlarged pore portion 12. In this case, as indicated by the arrow in FIG. 2(b), the fluid entering the small channel 13 comes into contact with the metal fine particle. Each metal fine particle included in or bonded to the enlarged pore portion 12 is restricted from moving in the framework 10. Thus, the metal fine particles are prevented from aggregating in the framework 10. As a result, a large contact area can be stably maintained between the metal fine particles and the fluid.

Next, a description will be provided of a case in which the functional material 20 has a catalytic function. Specifically, the functional material 20 may be in the form of the iron (Fe) fine particles. In this case, the functional structure 1 may be used, for example, as a catalyst for the FT synthesis reaction. The FT synthesis reaction is carried out using a catalyst to synthesize the liquid hydrocarbons from the carbon monoxide and the hydrogen, which is generally expressed by the following formula.

$$(2n + 1) H_2 + nCO \rightarrow C_nH_{2n+2} + nH_2O$$

Method of Producing Functional structure Precursor and Functional structure

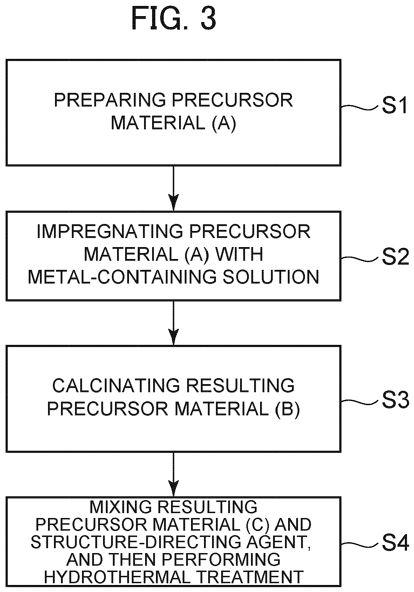

FIG. 3 is a flowchart showing a method of producing the functional structure 1 of FIGS. 1(a) and 1(b). Hereinafter, an example of the method for producing the functional structure precursor and the functional structure will be described with reference to an example in which the functional material present in the framework of the functional structure precursor is in the form of the metal oxide fine particle.

Step S1: Preparation Step

As shown in FIG. 3, first, a precursor material (A) for obtaining a framework having a porous structure and including a zeolite-type compound is prepared. The precursor material (A) is preferably a regular mesoporous material, and may be appropriately selected depending on the type (composition) of the zeolite-type compound constituting the framework of the functional structure precursor.

When the zeolite-type compound constituting the framework of the functional structure precursor is a silicate compound, the regular mesoporous material is preferably a compound having a Si-O skeleton having pores with a pore size of from 1 to 50 nm uniformly and regularly developed one-dimensionally, two-dimensionally, or three-dimensionally. Such a regular mesoporous material is obtained as a variety of synthetic products depending on the synthesis conditions. Examples of such synthetic products include SBA-1, SBA-15, SBA-16, KIT-6, FSM-16, and MCM-41. In particular, MCM-41 is preferred. For reference, SBA-1 has a pore size of from 8 to 30 nm, SBA-15 has a pore size of from 6 to 10 nm, SBA-16 has a pore size of 6 nm, KIT-6 has a pore size of 9 nm, FSM-16 has a pore size of from 3 to 5 nm, and MCM-41 has a pore size of from 1 to 10 nm. Examples of such a regular mesoporous material include mesoporous silica, mesoporous aluminosilicate, and mesoporous metallosilicate.

The precursor material (A) may be a commercially available product or a synthetic product. The precursor material (A) may be synthesized using a known method for synthesizing a regular mesoporous material. For example, a mixture solution which contains a raw material containing constituent element of the precursor material (A) and a casting agent for controlling the structure of the precursor material (A) is prepared, the pH of the mixture solution is optionally adjusted, and the mixture solution is subjected to hydrothermal treatment (hydrothermal synthesis). Subsequently, the precipitate (product) resulting from the hydrothermal treatment is collected (e.g., filtered off), washed and dried if necessary, and then calcinated to obtain a precursor material (A) as a powdery regular mesoporous material. In this process, the solvent for the mixture solution may be, for example, water, an organic solvent such as alcohol, or a mixed solvent thereof. The raw material may be selected depending on the type of the framework. Examples of the raw material include silica agents such as tetraethoxysilane (TEOS), fumed silica, and quartz sand. The casting agent may be any of various surfactants and block copolymers. Various types of surfactants, block copolymers, and the like can be used as the casting agent. The casting agent is preferably selected depending on the type of the regular mesoporous material to be synthesized. For example, MCM-41 is produced, a surfactant such as hexadecyltrimethylammonium bromide is preferable. The hydrothermal treatment may be performed, for example, in a sealed vessel under conditions at from 80 to 800°C and from 0 to 2000 kPa for from 5 hours to 240 hours. The calcining treatment may be performed, for example, in the air under conditions at from 350 to 850°C for from 2 to 30 hours.

Step S2: Impregnation Step

Next, the prepared precursor material (A) is impregnated with a metal-containing solution to form a precursor material (B) .

The metal-containing solution may be any solution containing a metal component (e.g., a metal ion) corresponding to the metal element (M) constituting the metal oxide fine particle of the functional structure precursor. For example, the metal-containing solution may be prepared by dissolving, in a solvent, a metal salt containing the metal element (M). Examples of such a metal salt include chlorides, hydroxides, oxides, sulfates, and nitrates, among which nitrates are preferred. The solvent may be, for example, water, an organic solvent such as alcohol, or a mixed solvent thereof.

Any method may be used to impregnate the precursor material (A) with the metal-containing solution. For example, before the calcination step described later, the impregnation is preferably performed by adding the metal-containing solution little by little in multiple portions to the powdery precursor material (A) being stirred. In order to allow the metal-containing solution to more easily enter into the pores of the precursor material (A), a surfactant is preferably added as an additive in advance before the addition of the metal-containing solution. Such an additive can act to cover the outer surface of the precursor material (A) and thus to inhibit the adhesion of the metal-containing solution on the outer surface of the precursor material (A), so that the metal-containing solution subsequently could easily enter into the pores of the precursor material (A).

Examples of such an additive include nonionic surfactants such as polyoxyethylene oleyl ether, polyoxyethylene alkyl ether, and polyoxyethylene alkyl phenyl ether. These surfactants have a large molecular size and thus cannot enter into the pores of the precursor material (A), which suggests that the surfactants will not adhere to the interior of the pores and will not hinder the entering the metal-containing solution into the pores. A method of adding the nonionic surfactant preferably includes, for example, adding from 50 to 270 mass% of the nonionic surfactant to the precursor material (A) before the calcination step described later. If the addition amount of the nonionic surfactant to the precursor material (A) is less than 50 mass%, the inhibiting effect may be difficult to achieve, and if the addition amount of the nonionic surfactant to the precursor material (A) is more than 500 mass%, undesirably high viscosity may be reached. Therefore, the addition amount of the nonionic surfactant to the precursor material (A) is set to a value within the above range.

Preferably, the addition amount of the metal-containing solution added to the precursor material (A) is appropriately adjusted in view of the amount of the metal element (M) contained in the metal-containing solution with which the precursor material (A) is to be impregnated (in other words, the amount of the metal element (M) to be present in the precursor material (B)). Before the calcination step described later, for example, the addition amount of the metal-containing solution added to the precursor material (A) is preferably adjusted such that the ratio (Si/M atomic ratio) of the number of silicon (Si) atoms in the precursor material (A) to the number of the metal element (M) atoms contained in the metal-containing solution is set to from 10 to 1000 and more preferably from 50 to 200. For example, when a surfactant is added as an additive to the precursor material (A) before the addition of the metal-containing solution to the precursor material (A), the addition amount of the metal-containing solution added to the precursor material (A) may be adjusted such that the calculated Si/M atomic ratio can be from 50 to 200. In such a case, the content of the metal element (M) of the metal oxide fine particles can be adjusted from 0.5 to 7.6 mass% based on the functional structure precursor. In the state of the precursor material (B), the content of the metal element (M) present within the porous is generally proportional to the addition amount of the metal-containing solution added to the precursor material (A) as long as the metal concentration of the metal-containing solution, the presence or absence of the additive, and other conditions such as temperature and pressure remain constant. The amount of the metal element (M) present in the precursor material (B) is also proportional to the amount of the metal element constituting the metal oxide fine particles present in the framework of the functional structure precursor. Accordingly, when the addition amount of the metal-containing solution added to the precursor material (A) is controlled within the above range, the pores of the precursor material (A) can be sufficiently impregnated with the metal-containing solution, which makes it possible to adjust the content of the metal oxide fine particles present in the framework of the functional structure precursor.

After the precursor material (A) is impregnated with the metal-containing solution, washing treatment may be performed if necessary. The washing liquid used may be water, an organic solvent such as alcohol, or a mixed solution thereof. Drying treatment is also preferably performed after the impregnation of the precursor material (A) with the metal-containing solution and then optionally after the washing treatment. The drying treatment may include natural drying overnight or so or drying at a high temperature of 150°C or less. The drying is preferably performed thoroughly because the framework structure of the precursor material (A) as the regular mesoporous material may collapse if the calcination treatment described later is performed while a large amount of water contained in the metal-containing solution or in the washing liquid remains in the precursor material (A).

Step S3: Calcination Step

Next, the precursor material (B) is calcinated to form a precursor material (C). The precursor material (B) is a product obtained through impregnating, with the metal-containing solution, the precursor material (A) for forming the framework having a porous structure and including the zeolite-type compound.

The calcining is preferably carried out, for example, in the air under conditions at from 350 to 850°C for 2 to 30 hours. Such calcination treatment allows the growth of crystals of the metal component entering into the pores for the regular mesoporous material, so that the metal oxide fine particles are formed in the pores.

Step S4: Hydrothermal Treatment Step

Then, a mixture solution of the precursor material (C) and a structure-directing agent is prepared, and the precursor material (C) obtained by calcining the precursor material (B) is subjected to hydrothermal treatment to obtain a functional structure precursor.

The structure-directing agent is a casting agent for directing the framework structure of the framework of the functional structure precursor. The structure-directing agent may be at least one of an organic structure-directing agent (usually abbreviated as "OSDA") and an inorganic structure-directing agent having $OH^-$. The organic structure-directing agent may be, for example, a surfactant. The organic structure-directing agent is preferably selected depending on the framework structure of the framework of the functional structure precursor, and preferred examples thereof include a surfactant such as tetramethylammonium bromide (TMABr), tetraethylammonium bromide (TEABr), tetrapropylammonium bromide (TPABr), or tetraethylammonium hydroxide (TEAOH). Typical examples of the inorganic structure-directing agent include alkali metal hydroxides and alkaline earth metal hydroxides, and preferred examples thereof include lithium hydroxide (LiOH), sodium hydroxide (NaOH), potassium hydroxide (KOH), rubidium hydroxide (Rb(OH)), calcium hydroxide ($Ca(OH)_2$), and strontium hydroxide ($Sr(OH)_2$).

The precursor material (C) and the structure-directing agent may be mixed during or before the hydrothermal treatment step. Any method may be used to prepare the mixture solution. The precursor material (C), the structure-directing agent, and the solvent may be mixed at the same time, or the precursor material (C) and the structure-directing agent may be separately dispersed into individual solvents and then the resulting dispersion solutions may be mixed. The solvent may be, for example, water, an organic solvent such as alcohol, or a mixed solvent thereof. Before the hydrothermal treatment, the mixture solution is preferably subjected to pH adjustment using an acid or a base.

The hydrothermal treatment may be carried out using a known method, which is preferably performed in a sealed vessel under conditions at from 80 to 800°C and from 0 to 2000 kPa for 5 hours to 240 hours. The hydrothermal treatment is also preferably performed in a basic atmosphere. Although the reaction mechanism is not necessarily clear, the hydrothermal treatment using the precursor material (C) as a raw material can gradually destroy the framework structure of the precursor material (C) as the regular mesoporous material but can form a new framework structure (porous structure) for the framework of the functional structure precursor due to the action of the structure-directing agent while the position of the metal oxide fine particles in the pores of the precursor material (C) substantially remains. The resulting functional structure precursor includes a framework of a porous structure and metal oxide fine particles present in the framework, in which the framework has channels connecting multiple pores derived from the porous structure, and at least some of the metal oxide fine particles are held in or bonded to the channel of the framework. In the embodiment of the hydrothermal treatment step, the mixture solution of the precursor material (C) and the structure-directing agent is prepared, and then the precursor material (C) is subjected to hydrothermal treatment. However, the hydrothermal treatment step is non-limited, the precursor material (C) may be hydrothermally treated without being mixed with the structure-directing agent and the precursor material (C).

Preferably, the precipitate (functional structure precursor) resulting from the hydrothermal treatment is collected (e.g., filtered off) and then optionally washed, dried, and calcinated. The washing liquid may be water, an organic solvent such as alcohol, or a mixed solution thereof. The drying treatment may include natural drying overnight or so or drying at a high temperature of 150°C or less. The drying is preferably performed thoroughly because the framework structure of the functional structure precursor as the framework may collapse if the calcination treatment is performed while a large amount of water remains in the precipitate. The calcination treatment may be performed, for example, in the air under conditions at from 350 to 850°C for 2 to 30 hours. During such calcination treatment, the structure-directing agent is burned away from the functional structure precursor. Depending on the intended use, the functional structure precursor may be used as it is without undergoing the calcination treatment of the collected precipitate. For example, when the functional structure precursor is used in a high-temperature oxidative atmosphere environment, the structure-directing agent will be burned away by exposing the functional structure precursor to the usage environment for a certain period of time. In such a case, the resulting functional structure can be used without any modification since such a functional structure is substantially the same as that obtained after the calcination treatment.

The resulting functional structure may be subjected to the reduction treatment (alteration) in a reducing gas atmosphere such as hydrogen gas so that the functional structure including the metal fine particles present in the framework can be obtained. In this case, the metal oxide fine particles present in the framework are reduced into the metal fine particles which correspond to the metal element (M) constituting the metal oxide fine particles.

Modifications of Functional structure Precursor 1

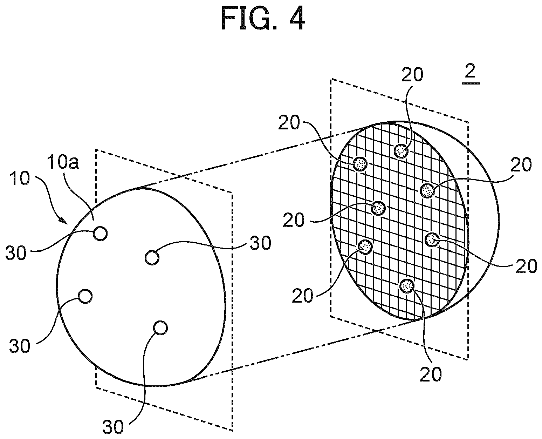

FIG. 4 is a schematic view showing a modification of the functional structure precursor 1 of FIGS. 1(a) and 1(b). The functional structure precursor 1 shown in FIGS. 1(a) and 1(b) includes the framework 10 and the functional material precursor 20 present in the framework 10. Such a structure is non-limiting, and, as shown in FIG. 4, for example, a functional structure precursor 2 may further include an additional functional material precursor 30 held on an outer surface 10a of the framework 10.

The functional material precursor 30 can perform one or more functions. The function of the functional material obtained by altering the additional functional material precursor 30 may be the same as or different from that of the functional material obtained by altering the functional material precursor 20. Examples of the function of the functional material obtained by altering the additional functional material precursor 30 may be the same as that of the functional material precursor 20. In particular, the functional material obtained by altering the functional material precursor 30 is preferably a catalytic material having a catalytic function. When both of the functional material obtained by altering the functional material precursor 20 and the functional material obtained by altering the functional material precursor 30 have the same function, a material of the functional material obtained by altering the additional functional material precursor 30 may be the same as or different from that of the functional material obtained by altering the functional material precursor 20. According to the configuration, the content of the functional material held on the functional structure obtained by altering the functional structure precursor 2 can be increased, which further enhances the function of the functional material.

In this case, the content of the functional material precursor 20 present in the framework 10 is preferably higher than the content of the additional functional material precursor 30 held on the outer surface 10a of the framework 10. In such a case, the function of the functional material 20 held on or bonded inside the framework 10 can be dominant, and the function of the functional materials can be stably exhibited.

While the functional structures according to embodiments of the present invention have been described, it will be understood that the embodiments are not intended to limit the present invention and may be altered or modified in various ways based on the technical idea of the present invention.

EXAMPLES

Examples 1 to 5

Synthesis of Precursor Material (A)

An aqueous solution of a mixture of a silica agent (tetraethoxysilane (TEOS) manufactured by Wako Pure Chemical Industries, Ltd.) and a surfactant as a casting agent was prepared, then subjected to pH adjustment as needed, and then hydrothermally treated in a sealed vessel at from 80 to 350°C for 100 hours. Subsequently, the produced precipitate was filtered off, then washed with water and ethanol, and then calcinated in the air at 600°C for 24 hours to obtain a precursor material (A) of the type and pore size shown in Table 1. The following surfactant was used according to the type of the precursor material (A) ("Type of precursor material (A): surfactant").
MCM-41: Hexadecyltrimethylammonium bromide (CTAB) (manufactured by Wako Pure Chemical Industries, Ltd.)

Preparation of Precursor Materials (B) and (C)

Next, depending on the type of the metal element (M) constituting the metal oxide fine particles shown in Table 1, a metal salt containing the metal element (M) was dissolved in water to prepare a metal-containing aqueous solution. The following metal salt was used according to the type of the metal fine particles ("Metal fine particle: metal salt").

Fe: Iron nitrate (III) nonahydrate (manufactured by Wako Pure Chemical Industries, Ltd.)
Co: Cobalt nitrate (II) hexahydrate (manufactured by Wako Pure Chemical Industries, Ltd.)

Regarding the examples with "O-15" shown in the "Additive" column of Table 1, a pretreatment was performed in which an aqueous solution of polyoxyethylene (15) oleyl ether (NIKKOL BO-15V, manufactured by Nikko Chemicals Co., Ltd., hereinafter abbreviated as "O-15") as an additive was added to the powdery precursor material (A). Subsequently, the metal-containing aqueous solution was added little by little in multiple portions to the pretreatment sample, and the resulting product was then dried at room temperature (20°C $\pm$ 10°C) for at least 12 hours to give the precursor material (B). Regarding the examples without "O-15" shown in the "Additive" column of Table 1, except for the 0-15 addition operation, the metal-containing aqueous solution was added and then the product was dried using the same process as mentioned above.

The addition amount of the metal-containing aqueous solution added to the precursor material (A) was adjusted such that the calculated ratio (Si/M atomic ratio) of the silicon (Si) content of the precursor material (A) to the metal element (M) content of the metal-containing aqueous solution was as shown in Table 1.

Subsequently, the resulting precursor material (B) impregnated with the metal-containing aqueous solution was calcinated in the air at 550°C for 12 hours to obtain the precursor material (C).

Synthesis of Functional structure

An aqueous solution of a mixture of the resulting precursor material (C) and sodium hydroxide and the structure-directing agent (OSDA) in the amount adjusted to achieve the Na/(Na + OSDA) ratio shown in Table 1 was prepared and then hydrothermally treated in a sealed vessel at from 80 to 350°C under the pH and time conditions shown in Table 1. Subsequently, the produced precipitate was filtered off, then washed with water, then dried at 100°C for at least 12 hours, and then calcinated in the air at 550°C for 12 hours. Subsequently, the calcinated product was collected and then subjected to the reduction treatment under the hydrogen gas stream at 500°C for 60 minutes to obtain the functional structure including the framework and the metal oxide fine particles as the functional material as shown in Table 1 (Example 1).

Comparative Example 1

In Comparative Example 1, the impregnation method was used to deposit the Fe particles on the MFI type silicalite.

Specifically, using the same process as in the examples, the metal-containing aqueous solution in the amount adjusted to achieve the content shown in Table 1 was added to the precursor material (A) to obtain the MFI type silicalite impregnated with the metal-containing aqueous solution. The product was then calcinated under the same conditions. The calcinated product was then subjected to the reduction treatment to obtain the functional structure of Comparative Example 1.

Comparative Example 2

In Comparative Example 2, Fe metal was substituted for the framework of the MFI type silicalite. Specifically, an aqueous solution of a mixture of the precursor material (A), a metal-containing solution, and tetrapropylammonium bromide (TPABr) as a structure-directing agent was prepared and then hydrothermally treated in a sealed vessel at from 80 to 350°C. Subsequently, the produced precipitate was filtered off, then washed with water, then dried, and then calcinated in the air. As a result, the metallosilicate having the framework containing Fe element was obtained.

Evaluation

The functional structures of the examples and the silicalite of the comparative example were evaluated for the various characteristics under the conditions shown below.

(A) Cross-Sectional Observation

Samples for observation were prepared by pulverization treatment from the functional structures of the examples and the iron oxide fine particles-carrying silicalite of Comparative Example 1. The cross-section of each sample was observed using a transmission electron microscope (TEM) (TITAN G2 manufactured by FEI Company).

As a result, in the functional structure of each of the examples, the functional material was found to be present and held inside the framework composed of silicalite or zeolite. On the other hand, in the silicalite of Comparative Example 1, the functional material was found to be deposited only on the outer surface of the framework and not found present in the framework.

Among the functional structures of the examples, the functional structures containing the iron oxide fine particles ($FeO_x$) as the metal oxide were subjected to cross-section cutting by use of focused ion beam (FIB) processing. The resulting cross-sections were subjected to elemental analysis by use of SEM (SU8020 manufactured by Hitachi High Technologies Co., Ltd.) and energy dispersive X-ray spectroscopy (EDX) (X-Max manufactured by Horiba, Ltd.). As a result, Fe element was detected from the inside of the framework.

The results of the cross-sectional observation by use of TEM and SEM/EDX revealed the existence of the iron oxide fine particles inside the framework.

(B) Average Inner Diameter of Channels of Framework and Average Particle Size of Functional Material

Any 500 channels of the framework were selected in the TEM image taken during the cross-sectional observation performed for the above evaluation (A). The long diameter and the short diameter of each of the channels were measured. The measured values were averaged to calculate the inner diameter of each channel (N = 500), and the calculated inner diameters were averaged as the average inner diameter $D_F$ of the channels of the framework. In a similar manner, any 500 functional material particles were also selected in the TEM image and each measured for the particle size (N = 500). The measurements were averaged to determine the average particle size $D_C$ of the functional material. Table 1 shows the results.

Small angle X-ray scattering (SAXS) analysis was also performed to confirm the average particle size and the dispersed state of the functional material. The SAXS measurement was carried out using the beamline BL19B2 of Spring-8. The resulting SAXS data were subjected to fitting by Guinier approximation method using a spherical model to determine the particle size. The particle size measurement was performed on the functional structure including the iron oxide fine particles as a metal oxide. For comparison, commercially available iron oxide fine particles (manufactured by Wako) were observed and measured using SEM.

The results were as follows. In the commercially available product, the iron oxide fine particles were found at random with different particle sizes in the range of about 50 nm to 400 nm. On the other hand, also as a result of the SAXS measurement, the scattering peaks for the particle sizes of 10 nm or less were detected from the functional structure of each of Examples with the average particle size of 2.5 nm determined from the TEM image. The results of the SAXS measurement and the cross-sectional measurement using SEM/EDX revealed that the functional material had a narrow range of particle sizes of 10 nm or less and was extremely highly dispersed inside the framework.

The functional structures of Examples 1 and 5 were subjected to reduction treatment at 400°C or more. As a result, the particles with sizes of 10 nm or less were maintained in each of the examples with the average particle size of 2.5 nm determined from the TEM image.

(C) Relationship between the Addition Amount of Metal-Containing Solution and the Content of Metal Included in Framework

Functional structures having the metal oxide fine particles held and included inside the framework were prepared with an additional amount corresponding to a Si/M atomic ratio of 50, 100, 200, or 1000 (M = Fe). Subsequently, the functional structures prepared with the addition amount were measured for the content (mass%) of the metal held and included in the framework. For the measurement, the functional structures with a Si/M atomic ratio of 100, 200, or 1000 were prepared using the same process as for the functional structure of Example 1, except that the addition amount of the metal-containing solution was adjusted to different levels.

The method for quantitatively determining the metal content was performed using inductively coupled plasma (ICP) alone or a combination of ICP and X-ray fluorescence (XRF) analysis. XRF analysis (using energy dispersive X-ray fluorescence analyzer SEA1200VX manufactured by SII Nanotechnology Inc.) was carried out in a vacuum atmosphere under conditions at an acceleration voltage of 15 kV (using a Cr filter) or an acceleration voltage of 50 kV (using a Pb filter).

XRF is a method for determining the metal content by the fluorescence intensity, and XRF alone cannot quantitatively determine the metal content (in terms of mass%). Therefore, ICP analysis was used to quantify the content of metal in the functional structure containing metal in such an amount that the Si/M atomic ratio was 100, and the result of XRF measurement and the result of ICPO measurement were used to determine the content of metal in the functional structure containing metal in such an amount that the Si/M atomic ratio was 50 or less than 100.

The results revealed that, at least in the Si/M atomic ratio range of 50 to 1000, the content of the metal included in the functional structure increased with increasing the addition amount of the metal-containing solution.

(D) Existence Ratio of Metal Element (M) Forming a Coordination Structure of Four-Coordination Number

[0093] Fluorescence yield XAFS measurement of the Fe-K absorption edge was performed using the Lytle detector of BL08B2 at Spring-8. Fe-substituted framework zeolite and $\alpha$-$Fe_2O_3$ were used as the reference materials, the linear coupling of least squares using Microsoft Excel® Solver was performed to separate the peaks in the resulting XANES spectrum, and the area of the peak derived from the coordination structure of four-coordination number and the area of the peak derived from the coordination structure of six-coordination number were calculated to calculate the concentration of the metal element forming the coordination structure of four-coordination number by Formula (1) shown above.

(E) Performance Evaluation

The functional structures of the examples and the silicalite of the comparative example were evaluated for the catalytic ability (performance) of the functional material (catalytic material). Table 1 shows the results.

(1) Catalytic Activity

Catalytic activity was evaluated under the conditions shown below. First, an atmospheric pressure flow reactor was filled with 70 mg of the catalyst structures. While hydrogen (8 mL/min) and carbon monoxide (4 mL/min) were supplied to the reactor, FT synthesis reaction was carried out with heating from 100 to 700°C at 0.1 MPa for 1 hour. The used atmospheric pressure flow reactor was a single microreactor (Rx-3050SR available from Frontier Laboratory).

After the completion of the reaction, the generated gas and the generated liquid that were collected were subjected to component analysis using gas chromatography-mass spectrometry (GC/MS). As the analysis apparatus, TRACE 1310GC (manufactured by Thermo Fisher Scientific Inc., detector: thermal conductivity detector) was used.

Achievement of the hydrocarbon (excluding $CH_4$, hereinafter the same shall apply) production at less than 230°C (namely, the reaction initiation temperature of 230°C or less) was evaluated to indicate excellent catalytic activity ( ⊚ ), achievement of the hydrocarbon production at 250°C (namely, the reaction initiation temperature of more than 250°C and less than 250°C) to indicate good catalytic activity (o), achievement of the hydrocarbon production at 270°C (namely, the reaction initiation temperature of more than 255°C and less than 270°C) to indicate as not good but acceptable catalytic activity (Δ), and the reaction initiation temperature of 270°C or more or no occurrence of the FT synthesis reaction to indicate poor (unacceptable) catalytic activity (x).

[Table 1]

| No. | Conditions for production of functional structure | | | | | | | | | Functional structure | | | | | | Evaluation result |
| | Precursor material (A) | | Raw material for precursor material (A) | | | Conditions for hydrothermal treatment using precursor material (C) | | | | Framework | | Functional material | | $D_C/D_F$ | Ratio of metal with coordination structure of four-coordination number | Activity for FT synthesis reaction |
| | | | | | | | | | | Zeolite-type compound | | Metal oxide fine particle | | | | |
| | Type | Pore size | Additive | Metal aqueous solution | Si/M | Type of structure-directing agent | Na/(OSDA+Na) ratio | pH | Time | Structure | Average inner diameter $D_F$ of channels | Type | Average particle size $D_C$ | | | |
| | | (nm) | | | | | | | (h) | | (nm) | | (nm) | | | |
| Example 1 | MCM-41 | 2.5 | 0-15 | Iron nitrate (III) nonahydrate | 100 | TEAOH | 0.00 | 13 | 144 | *BEA | 0.67 | FeOx | 2.5 | 3.7 | ≦0.10 | ○ |
| Example 2 | | 2.5 | 0-15 | Iron nitrate (III) nonahydrate | 100 | Absent | 1.00 | | 96 | MOR | 0.60 | FeOx | 2.5 | 42 | 0.74 | △ |
| Example 3 | | 2.5 | 0-15 | Iron nitrate (III) nonahydrate | 100 | | 0.16 | | | MFI | | FeOx | 2.5 | 4.6 | 0.69 | △ |
| Example 4 | | 2.5 | 0-15 | Iron nitrate (III) nonahydrate | 100 | TPEBr | 0.16 | 12 | 72 | MFI | 0.54 | FeOx | 2.5 | 4.6 | 0.30 | △ |
| Example 5 | | 2.5 | 0-15 | Cobalt nitrate (III) | 100 | | 0.16 | | | MFI | | CoOx | 2.5 | 4.6 | ≦0.10 | ◎ |
| Comparative Example 1 | FeOx/MFI | | | | | | | | | | | | ≦50 | - | _[1] | x |
| Comparative Example 2 | Fe-substituted zeolite | | | | | | | | | | | | - | - | 1.00 | x |

1) Resultant carrying FeOx contains no metal with coordination structure of four-coordination number.

18

EP 3 892 370 A1

Table 1 shows that the functional structures (Examples 1 to 5), found to hold the functional material inside the framework in the cross-sectional observation, have higher catalytic activity for the FT synthesis reaction than the functional structure (Comparative Example 1) having the functional material only deposited on the outer surface of the framework or than the framework (Comparative Example 2) with no functional material in which the chemical bonds in the framework was partially substituted with the Fe ions.

EXPLANATION OF REFERENCE NUMERALS

| | |
|---|---|
| 1: | Functional structure |
| 10: | Framework |
| 10a: | Outer surface |
| 11: | Channel |
| 11a: | Pore |
| 12: | Enlarged pore portion |
| 20: | Functional material |
| 30: | Functional material |
| $D_C$: | Average particle size |
| $D_F$: | Average inner diameter |
| $D_E$: | Inner diameter |

**Claims**

1. A functional structure precursor comprising:

   supports each having a porous structure and including a zeolite-type compound; and
   at least one functional material precursor present in the supports and including a metal element (M), wherein each of the supports has channels communicating with one another,
   the functional material precursor is present at least in the channel of each of the supports, and
   the metal element (M) having constituted the functional material precursor is partially substituted with an element having constituted the supports.

2. The functional structure precursor according to claim 1, wherein the metal element (M) exists as a central atom of two types of coordination structures in the functional material, a first type being a coordination structure of four-coordination number and a second type being a coordination structure of six-coordination number.

3. The functional structure precursor according to claim 1 or 2, wherein a ratio of the number of the metal element (M) in the coordination structure of four-coordination number to the total number of the metal element (M) in the coordination structure of four-coordination number and the coordination structure of six-coordination number is 0.75 or less, by atomic ratio.

4. A functional structure precursor comprising:

   supports each having a porous structure and including a zeolite-type compound; and
   at least one functional material precursor present in the supports and including a metal element (M), wherein each of the supports has channels communicating with one another,
   the functional material precursor is present at least in the channel of each of the supports, and
   the existence ratio P of the metal element (M) forming a coordination structure of four-coordination number is 0.75 or less, the existence ratio P being calculated by substituting into formula (1) value (a) representing a peak intensity of a metal element forming the coordination structure of four-coordination number (a metal element being in the functional structure precursor and having a spectral pattern corresponding to metallosilicate) and value (b) representing a peak intensity of a metal element forming a coordination structure of six-coordination number (a metal element being in the functional structure precursor and having a spectral pattern corresponding to a metal oxide before being reduced to metal), based on an X-ray absorption near edge structure (XANES) spectrum determined from an absorption edge of the metal in the functional structure precursor measured by X-ray absorption fine structure (XAFS) measurement.

$$P=(a)/(a+b) \quad \cdots (1)$$

**5.** The functional structure precursor according to claim 4, wherein the existence ratio P is 0.20 or less.

**6.** A functional structure precursor comprising:

supports each having a porous structure and including a zeolite-type compound; and
at least one functional material precursor present in the supports and including a metal element (M), wherein each of the supports has channels communicating with one another,
the functional material precursor is present at least in the channel of each of the supports, and
the existence ratio P of the metal element (M) forming a coordination structure of four-coordination number is 0 or more and 0.10 or less, the existence ratio P being calculated by substituting into formula (1) value (a) representing a peak intensity of a metal element forming the coordination structure of four-coordination number (a metal element being in the functional structure precursor and having a spectral pattern corresponding to metallosilicate) and value (b) representing a peak intensity of a metal element forming a coordination structure of six-coordination number (a metal element being in the functional structure precursor and having a spectral pattern corresponding to a metal oxide before being reduced to metal), based on an X-ray absorption near edge structure (XANES) spectrum determined from an absorption edge of the metal in the functional structure precursor measured by X-ray absorption fine structure (XAFS) measurement.

$$P=(a)/(a+b) \quad \cdots (1)$$

**7.** The functional structure precursor according to any one of claims 1 to 6, wherein

the channels have any one of a one-dimensional pore, a two-dimensional pore, and a three-dimensional pore of a framework structure of the zeolite-type compound, and have an enlarged pore portion different from the one-dimensional pore, the two-dimensional pore, and the three-dimensional pore, and
the functional material precursor is present at least in the enlarged pore portion.

**8.** The functional structure precursor according to claim 7, wherein the enlarged pore portion connects a plurality of pores constituting any one of the one-dimensional pore, the two-dimensional pore, and the three-dimensional pore.

**9.** The functional structure precursor according to any one of claims 1 to 8, wherein

the functional material precursor comprises a catalytic material precursor, and
each of the supports carries at least one catalytic material precursor.

**10.** The functional structure precursor according to claim 9, wherein the catalytic material precursor is in the form of a metal oxide fine particle.

**11.** The functional structure precursor according to claim 10, wherein the metal oxide fine particle has an average particle size larger than an average inner diameter of the channels and equal to or smaller than an inner diameter of the enlarged pore portion.

**12.** The functional structure precursor according to claim 10, wherein the metal element (M) of the metal oxide fine particle is included in an amount from 0.5 to 2.5 mass% with respect to the functional structure.

**13.** The functional structure precursor according to any one of claims 10 to 12, wherein the metal oxide fine particle has an average particle size of 0.1 nm to 50 nm.

**14.** The functional structure precursor according to any one of claims 10 to 13, wherein a ratio of the average particle size of the metal oxide fine particle to the average inner diameter of the channels is from 0.06 to 500.

**15.** The functional structure precursor according to any one of claims 1 to 14, wherein the channels have an average inner diameter of 0.1 nm to 1.5 nm.

16. The functional structure precursor according to any one of claims 1 to 15, further comprising at least one additional functional material precursor held on an outer surface of the support.

17. The functional structure precursor according to claim 16, wherein the content of at least one functional material precursor present in the support is higher than the content of the at least one additional functional material precursor held on the outer surface of the support.

18. The functional structure precursor according to any one of claims 1 to 17, wherein the zeolite-type compound is a silicate compound.

19. A functional structure comprising a product of reduction of the precursor according to any one of claims 1 to 18.

# FIG. 1A

# FIG. 1B

# FIG. 2A

# FIG. 2B

# FIG. 3

PREPARING PRECURSOR
MATERIAL (A) — S1

IMPREGNATING PRECURSOR
MATERIAL (A) WITH
METAL-CONTAINING SOLUTION — S2

CALCINATING RESULTING
PRECURSOR MATERIAL (B) — S3

MIXING RESULTING
PRECURSOR MATERIAL (C) AND
STRUCTURE-DIRECTING AGENT,
AND THEN PERFORMING
HYDROTHERMAL TREATMENT — S4

# FIG. 4

<table>
<tr><td colspan="2" align="center">**INTERNATIONAL SEARCH REPORT**</td><td>International application No.<br>PCT/JP2019/047294</td></tr>
</table>

**A. CLASSIFICATION OF SUBJECT MATTER**
B01J 29/035(2006.01)i; B01J 29/24(2006.01)i; B01J 29/46(2006.01)i; B01J 29/76(2006.01)i; B01J 37/16(2006.01)i
FI: B01J29/035 M; B01J37/16; B01J29/76 M; B01J29/24 M; B01J29/46 M
According to International Patent Classification (IPC) or to both national classification and IPC

**B. FIELDS SEARCHED**

Minimum documentation searched (classification system followed by classification symbols)
B01J21/00-38/74

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2017-128480 A (JGC CATALYSTS AND CHEMICALS LTD.) 27.07.2017 (2017-07-27) claims, paragraphs [0020]-[0065], [0071], fig. 1, 3 | 1-19 |
| X | JP 2016-529190 A (DANMARKS TEKNISKE UNIVERSITET) 23.09.2016 (2016-09-23) claims, paragraphs [0042]-[0068], [0074]-[0081], [0103]-[0111] | 1-19 |
| X | LAPRUNE, David, et al., "Highly Dispersed Nickel Particles Encapsulated in 1-19 Multi-hollow Silicalite-1 Single Crystal Nanoboxes:Effects of Siliceous Deposits and Phosphorous Species on the Catalytic Performances", ChemCatChem, 2017, vol. 9, pp. 2297-2307, <DOI: 10.1002/cctc.201700233> in particular, abstract, results and discussion, experimental section, fig. 2-3, 6-8 | 1-19 |

☒ Further documents are listed in the continuation of Box C.       ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 February 2020 (10.02.2020) | 25 February 2020 (25.02.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2019/047294 |

C (Continuation).    DOCUMENTS CONSIDERED TO BE RELEVANT

| Category* | Citation of document, with indication, where appropriate, of the relevant passages | Relevant to claim No. |
|---|---|---|
| X | WO 2010/097108 A1 (HALDOR TOPSOE A/S) 02.09.2010 (2010-09-02) claims 1-15, page 1, lines 15-24, page 4, lines 18-25, page 5, lines 24-28, page 7, lines 14-24, page 11, lines 1-5, page 13, lines 21-26, page 24, lines 6-10, examples, fig. 1-8 | 1-19 |
| P, X | JP 2018-202411 A (FURUKAWA ELECTRIC CO., LTD.) 27.12.2018 (2018-12-27) claims, paragraphs [0067], [0074], examples, fig. 1-4 | 1-19 |
| P, X | WO 2018/221690 A1 (NATIONAL UNIVERSITY CORPORATION HOKKAIDO UNIVERSITY) 06.12.2018 (2018-12-06) claims, examples, fig. 1-4 | 1-19 |

Form PCT/ISA/210 (continuation of second sheet) (January 2015)

**INTERNATIONAL SEARCH REPORT**
Information on patent family members

International application No.

PCT/JP2019/047294

| Patent Documents referred in the Report | Publication Date | Patent Family | Publication Date |
|---|---|---|---|
| JP 2017-128480 A | 27 Jul. 2017 | (Family: none) | |
| JP 2016-529190 A | 23 Sep. 2016 | US 2016/0137516 A1 claims, paragraphs [0077]-[0103], [0110]-[0117], [0138]-[0145] WO 2015/001123 A1 EP 3016741 A1 CN 105358251 A | |
| WO 2010/097108 A1 | 02 Sep. 2010 | WO 2010/097224 A2 | |
| JP 2018-202411 A | 27 Dec. 2018 | (Family: none) | |
| WO 2018/221690 A1 | 06 Dec. 2018 | (Family: none) | |

Form PCT/ISA/210 (patent family annex) (January 2015)

**EP 3 892 370 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H04227847 A
- JP S59102440 A
- WO 2015072573 A
- JP 2000070720 A
- JP 2017128480 A
- WO 2010097108 A